# EUROPEAN PATENT APPLICATION

(11) **EP 3 779 081 A1**
(43) Date of publication of application: **17.02.2021**
(21) Application number: 19191862.2
(22) Date of filing: 14.08.2019
(51) Int. Cl.: E04B 1/94, E04B 1/76, A62C 2/06, F16L 5/04, F16L 57/04, F24F 13/02

(54) **INSULATION SYSTEM**

(71) Applicant: Paroc Group Oy, 00180 Helsinki (FI)
(72) Inventor: Lindström, Jim, 462 60 Vänersborg (SE); Clausen, Ole, 3600 Frederikssund (DK)
(74) Representative: Lawrie IP Limited

(57) **Abstract**

An insulation system comprising an insulation assembly having at least two mineral wool insulation panels, wherein the at least two panels are arranged in layers. The system further comprises at least one first further mineral wool insulation panel, the at least one further panel being attachable to an edge surface of one of the at least two panels of the insulation assembly.

## Description

### Field of the invention

The present invention relates to an insulation assembly, system and method, particularly, but not exclusively, a fire insulation assembly, system, and method for installing the same.

### Background to the invention

Fire insulation systems are known for insulating apertures surrounding conduits that penetrate walls, ceilings etc. Known systems for providing fire insulation include loose mineral wool, or the like, fire insulating panels, fire sealant materials and structural component attachment members. Such systems are used to fill the aperture and mount fire insulating panels to the conduits.

However, while such known systems provide adequate fire insulation between the wall/ceiling and conduit, the system requires sufficient space to exist between the conduit and wall/ceiling to allow a user to assemble the necessary components. If the space between the conduit and wall/ceiling is not sufficient, it is necessary to remove the conduit. This is often time consuming and costly, or not possible.

The inventor has appreciated the shortcomings in these known fire insulation systems.

### Statements of Invention

According to a first aspect of the present invention there is provided an insulation assembly comprising:
at least two panels of insulating material,
wherein the at least two panels are arranged in layers.

The at least two panels may be secured together.

The insulation assembly may be a fire insulation assembly. The insulation assembly may be a smoke insulation assembly. The insulation assembly may be a fire seal, or fire seal assembly. The insulation assembly may be a fire and smoke insulation assembly. The insulation assembly may be an acoustic insulation assembly. The insulation assembly may be a condensation insulation assembly. The insulation assembly may be a thermal insulation assembly.

The at least two panels may be, or made from, fire insulating material. The at least two panels may be, or made from, smoke insulating material. The at least two panels may be, or made from, acoustic insulating material. The at least two panels may be, or made from, condensation insulating material. The at least two panels may be, or made from, thermal insulating material.

The insulation assembly may be for insulating an aperture in a conduit, duct, structural component, or support member, such as an aperture in a ceiling, deck, roof, or wall, or the like. The insulation assembly may be for insulating an aperture in a structural component, or support member, such as an aperture in a ceiling, deck, roof, or wall, or the like, between the structural component and at least a portion of a heating, ventilation and air conditioning (HVAC) conduit. In this arrangement, the HVAC conduit is penetrating the structural component.

The HVAC conduit may be substantially rectangular in its lateral cross section.

The at least two panels may be substantially planar. The panels may be cut from larger panels, or slabs, of fire insulating material. The panels may be cut from larger planar panels, or slabs, of fire insulating material. The panels may be strip portions, or members. The panels may be portions of fire insulating panels, or slabs. The panels may be panel sections.

The panels may be substantially rigid. The panels may be formed from compressed fire insulating material.

The panels may have a density of between 40 kg/m³ and 220 kg/m³. Preferably, the panels have a density of between 60 kg/m³ and 200 kg/m³. More preferably, the panels have a density of between 80 kg/m³ and 180 kg/m³.

The panels may have a thickness of between 20 mm and 200 mm. Preferably, the panels have a thickness of between 30 mm and 150 mm. More preferably, the panels have a thickness of between 30 mm and 100 mm.

The panels, or slabs, of fire insulating material from which the panels are cut may have a length of between 1,200 mm and 2,400 mm, a width of between 600 mm and 1,800 mm, and a thickness of between 30 mm and 100 mm.

The panels may be formed from mineral wool. The panels may be formed from rock/stone/glass wool. The panels may be formed from compressed mineral wool. The panels may be formed from compressed rock/stone/glass wool.

Each panel section may include an upper surface, a lower surface and an edge surface. The edge surface may be an outer perimeter edge portion. The upper surface and the lower surface may be planar surfaces. At least a portion of the edge surface may be planar. The edge surface may include at least two planar surfaces. The at least two planar surfaces may be parallel to one another. Alternatively, the at least two planar surfaces may be perpendicular to one another. The edge surface may include four planar surfaces. The four planar surfaces may be orthogonally arranged.

The upper surface of the panel section may be coated with a layer of fire insulating material. The upper surface of the panel section may include a coating of fire insulating material. The coating, or coated layer, may be a laminate, or laminated, layer.

The coating, or coated layer, may be a metal. The coating, or coated layer, may be anodised. The coating, or coated layer, may be lacquered. The outer surface of the coating, or coated layer, may be anodised. The outer surface of the coating, or coated layer, may be lacquered. The coating, or coated layer, may be an anodised metal. The coating, or coated layer, may be a lacquered metal

The coating, or coated layer, may have a thickness of between 0.001 mm and 0.5 mm.

The coating, or coated layer, may be aluminium. The coating, or coated layer, may be black aluminium. The coating, or coated layer, may be anodised aluminium.

The lower surface and edge surface(s) may or may not include a coated layer.

The insulation assembly may include a plurality of panels. The insulation assembly may include three panels. The insulation assembly may include four panels. The insulation assembly may include five panels.

The panels may be arranged such that the upper surface of one panel section faces the lower surface of another panel section.

The panels may be arranged such that the panels abut each other. The panels may be arranged such that there are no gaps between the adjacent upper and lower surfaces.

The panels may be configured to be screwed, or screwable. That is, the panels may be configured to receive and secure a screw fastener therein.

The panels may be secured together by one or more fastening devices. The fastening devices may be screw members, or the like. The fastening devices may be fire springs, or the like.

The one or more fastening devices may penetrate the upper and/or lower surfaces of the panels. The one or more fastening devices may penetrate the outermost panel section, or panels.

The panels may be secured together by an adhesive. The adhesive may be a non-combustible adhesive.

Each panel section may be the same shape and size. That is, each panel section may be the same shape and have the same thickness. Each panel section may have the same shape of upper surface and lower surface. The panels may be congruent. The panels may be cut to be the same shape and size. Each panel may be substantially identical in geometry and material properties.

The panels may be strips, or stripes, of the larger panel section. Where the larger panel section is a substantially rectangular member, the panels may be lateral strips, or stripes, thereof. That is, the panels may be formed by making cuts along the lateral axis of the larger panel section. In this arrangement, the panels may be substantially cuboid members.

Each panel section may include a generally rectangular upper surface, rectangular lower surface, and four rectangular edge surfaces. The surfaces of the panels may be planar. The upper surface and lower surface may be parallel. Each edge surface may be orthogonally arranged with respect to the upper surface and lower surface.

The panels may be of any suitable shape. The panels may be cut to any required shape.

The at least two panels may be a first set of panels. The insulation may comprise a further set of at least two panels. The further set of at least two panels may have the same features as the first set of two panels described above. The insulation assembly may comprise a first set of panels and a second set of panels. Each set of panels may be for insulating an aperture.

The first set of panels and second set of panels may be secured together. The first set of panels and second set of panels may be secured together by one or more fastening devices, such as a screw member, or the like.

The first set of panels and the second set of panels may be unsecured to each other.

The first set of panels and second set of panels may together form an L-shape.

The insulation assembly may further comprise at least one (first) further panel of insulating material. The at least one further panel of insulating material may be fire insulating material. The at least one further panel of fire insulating material may have the same features as the at least two panels described above. The at least one further panel of fire insulating material may be the same as the panels, or slabs, of fire insulating material from which the at least two panels are cut.

The at least one further panel of fire insulating material may be rectangular.

The at least one further panel of fire insulating material may be attachable to an edge surface of one of the panels. The at least one further panel of fire insulating material may be arranged orthogonally to the upper, or lower, surface of the panel to which it is attached.

The at least one further panel of fire insulating material may be attachable to an edge surface of one of the outermost panels of the assembly.

A corner portion of the at least one further panel of fire insulating material may be attachable to the panel.

The at least one further panel of fire insulating material may be attachable to the panel by a screw fastener, such as a fire spring, or the like.

The insulation assembly may further comprise two further panels of insulating material (each further panel being a second further panel). The two further panels of insulating material may be fire insulating material. Each further panel of fire insulating material may have the same features as the at least two panels described above. Each further panel of fire insulating material may be the same as the panels, or slabs, of fire insulating material from which the at least two panels are cut.

Each further panel of fire insulating material may be rectangular.

Each further panel of fire insulating material may be attachable to an edge surface of one of the panels. Each further panel of fire insulating material may be attachable to a different edge surface of one of the panels. Each further panel of fire insulating material may be arranged orthogonally to the upper, or lower, surface of the panel to which it is attached, and each further panel of fire insulating material may be arranged orthogonally to the other. Each further panel of fire insulating material may be attachable to the same panel.

Each further panel of fire insulating material may be attachable to an edge surface of one of the outermost panels of the assembly.

A corner portion of each further panel of fire insulating material may be attachable to the panel.

Each further panel of fire insulating material may be attachable to the panel by a screw fastener, such as a fire spring, or the like.

Each further panel of fire insulating material may be attachable to one another. Each further panel of fire insulating material may be attachable to one another by a screw fastener, such as a fire spring, or the like.

Where the insulation assembly comprises two further panels of fire insulating material, the two panels may be arranged orthogonally to one another. That is, the two panels may be arranged in an L-shape.

The insulation assembly may further comprise three further panels of insulating material (each further panel being a third further panel). The three further panels of insulating material may be fire insulating material. Each further panel of fire insulating material may have the same features as the at least two panels described above. Each further panel of fire insulating material may be the same as the panels, or slabs, of fire insulating material from which the at least two panels are cut.

Each further panel of fire insulating material may be rectangular.

Two of the three further panels of fire insulating material may be attachable to an edge surface of one of the panels. The third further panel of fire insulating material may be attachable to the other two further panels of fire insulating material. Two of the three further panels of fire insulating material may be attachable to a different edge surface of one of the panels. Each of the three further panels of fire insulating material may be arranged orthogonally to the upper, or lower, surface of the panel to which they are attached, and may be arranged orthogonally to each other. Two of the three further panels of fire insulating material may be arranged to be parallel to one another, and the third further panel may be perpendicular thereto. Two of the three further panels of fire insulating material may be attachable to the same panel.

Two of the three further panels of fire insulating material may be attachable to an edge surface of one of the outermost panels of the assembly.

A corner portion of two of the three further panels of fire insulating material may be attachable to the panel.

Two of the three further panels of fire insulating material may be attachable to the panel by a screw fastener, such as a fire spring, or the like. The third further panel of fire insulating material may be attachable to the other two panels. The third further panel of fire insulating material may be attachable to the other two panels by screw fasteners, such as a fire springs, or the like.

Where the insulation assembly comprises three further panels of fire insulating material, the three panels may be arranged orthogonally to one another. That is, the three panels may be arranged in a U-shape.

Each further panel of fire insulating material may be attachable to a different panel of the assembly. Each further panel of fire insulating material may be attachable to a different outermost panel of the assembly. Each further panel of fire insulating material may be attachable to opposing outermost panels of the assembly. That is, a first further panel of fire insulating material may be attachable to an uppermost, or leftmost, panel, and a second further panel of fire insulating material may be attachable to a lowermost, or rightmost, panel (i.e. two first further panels).

Each further panel of fire insulating material may have the same features as the at least two panels described above. Each further panel of fire insulating material may be the same as the panels, or slabs, of fire insulating material from which the at least two panels are cut.

Each further panel of fire insulating material may be rectangular.

Each further panel of fire insulating material may be attachable to an edge surface of the panel. Each further panel of fire insulating material may be attachable to the same edge surface, or corresponding edge surface, of each panel. Each further panel of fire insulating material may be arranged orthogonally to the upper, or lower, surface of the panel to which it is attached, and each further panel of fire insulating material may be parallel with the other.

A corner portion of each further panel of fire insulating material may be attachable to the panel.

Each further panel of fire insulating material may be attachable to the panel by a screw fastener, such as a fire spring, or the like.

The insulation assembly may further comprise four further panels of fire insulating material. Two further panels of fire insulating material may be attachable to one outermost panel of the assembly, and the other two further panels may be attachable to the other outermost panel of the assembly. Each pair of further panels of fire insulating material may be attachable to opposing outermost panels of the assembly. That is, a first pair of further panels of fire insulating material may be attachable to an uppermost, or leftmost, panel, and a second further pair of panels of fire insulating material may be attachable to a lowermost, or rightmost, panel (i.e. two second further panels).

Each further panel of fire insulating material may have the same features as the at least two panels described above. Each further panel of fire insulating material may be the same as the panels, or slabs, of fire insulating material from which the at least two panels are cut.

Each further panel of fire insulating material may be rectangular.

Each further panel of fire insulating material may be attachable to an edge surface of the panel. Each further panel of fire insulating material may be attachable to a different edge surface of the panel. Each further panel of fire insulating material may be arranged orthogonally to the upper, or lower, surface of the panel to which it is attached, and each further panel of fire insulating material may be arranged orthogonally to the other.

A corner portion of each further panel of fire insulating material may be attachable to the panel.

Each further panel of fire insulating material may be attachable to the panel by a screw fastener, such as a fire spring, or the like.

Each pair of further panels of fire insulating material may be attachable to one another. Each pair of further panels of fire insulating material may be attachable to one another by a screw fastener, such as a fire spring, or the like.

The two panels in each pair of further panels of fire insulating material may be arranged orthogonally to one another. That is, the two panels may be arranged in an L-shape.

The insulation assembly may further comprise six further panels of fire insulating material. Two further panels of fire insulating material may be attachable to one outermost panel of the assembly, and another two further panels may be attachable to the other outermost panel of the assembly. Each pair of further panels may include a further panel attached thereto. The two further panels of fire insulating material may be attachable to opposing outermost panels of the assembly. That is, a first pair of further panels of fire insulating material may be attachable to an uppermost, or leftmost, panel, and a second further pair of panels of fire insulating material may be attachable to a lowermost, or rightmost, panel, and each pair of further panels includes a further panel attached therebetween (i.e. two third further panels).

Each further panel of fire insulating material may have the same features as the at least two panels described above. Each further panel of fire insulating material may be the same as the panels, or slabs, of fire insulating material from which the at least two panels are cut.

Each further panel of fire insulating material may be rectangular.

Two of the three further panels of fire insulating material on each side of the insulation assembly may be attachable to an edge surface of the panel. The third further panel of fire insulating material may be attachable to the other two further panels of fire insulating material. Two of the three further panels of fire insulating material on each side of the insulation assembly may be attachable to a different edge surface of the panel. Each of the three further panels of fire insulating material on each side of the insulation assembly may be arranged orthogonally to the upper, or lower, surface of the panel to which they are attached, and may be arranged orthogonally to each other. Two of the three further panels of fire insulating material on each side of the insulation assembly may be arranged to be parallel to one another, and the third further panel may be perpendicular thereto. Two of the three further panels of fire insulating material on each side of the insulation assembly may be attachable to the same panel.

A corner portion of two of the three further panels of fire insulating material on each side of the insulation assembly may be attachable to the panel.

Two of the three further panels of fire insulating material on each side of the insulation assembly may be attachable to the panel by a screw fastener, such as a fire spring, or the like. The third further panel of fire insulating material may be attachable to the other two panels. The third further panel of fire insulating material may be attachable to the other two panels by screw fasteners, such as fire springs, or the like.

The three panels of fire insulating material on each side of the insulation assembly may be arranged orthogonally to one another. That is, the three panels may be arranged in a U-shape.

The insulation assembly and the further panels of fire insulation material may be arranged to receive at least a portion of a conduit therethrough. The insulation assembly and the further panels of fire insulation material may be arranged to define an aperture through which a conduit may pass. The insulation assembly and the further panels of fire insulation material may be arranged to engage with at least a portion of a conduit. The further panels of fire insulation material may be attachable to the conduit. The insulation assembly may be arranged to be in an interference fit with the conduit.

According to a second aspect of the present invention there is provided an insulation assembly comprising:
at least two panels of insulating material,
wherein the at least two panels are arranged in layers, and
wherein the at least two panels are secured together.

Embodiments of the second aspect of the present invention may include one or more features of the first aspect of the present invention or its embodiments.

According to a third aspect of the present invention there is provided an insulation system comprising:
an insulation assembly comprising:
   at least two panels of insulating material,
wherein the at least two panels are arranged in layers; and
at least one further panel of insulating material, the at least one further panel being attachable to an edge surface of one of the at least two panels of the insulation assembly.

The at least two panels of the insulation assembly may be secured together.

The insulation system may be a fire insulation system. The insulation system may be a smoke insulation system. The insulation system may be a fire seal, or fire seal system. The insulation system may be a fire and smoke insulation system. The insulation system may be an acoustic insulation system. The insulation assembly may be a condensation insulation system. The insulation assembly may be a thermal insulation system.

The at least two panels may be fire insulating material. The at least two panels may be smoke insulating material. The at least two panels may be acoustic insulating material. The at least two panels may be condensation insulating material. The at least two panels may be thermal insulating material.

The insulation system may be for insulating an aperture in a structural component, or support member, such as an aperture in a ceiling, deck, roof, or wall, or the like. The insulation system may be for insulating an aperture in a structural component, or support member, such as an aperture in a ceiling, deck, roof, or wall, or the like, between the structural component and at least a portion of a heating, ventilation and air conditioning (HVAC) conduit. In this arrangement, the HVAC conduit is penetrating the structural component.

The insulation system may be for insulating an HVAC conduit that penetrates an aperture in a structural component, or support member, such as an aperture in a ceiling, deck, roof, or wall, or the like.

The HVAC conduit may be substantially rectangular in its lateral cross section.

The at least one further panel of fire insulating material may have the same features as the at least two panels described above. The at least one further panel of fire insulating material may be the same as the panels, or slabs, of fire insulating material from which the at least two panels are cut.

The at least one further panel of fire insulating material may be rectangular.

The at least one further panel of fire insulating material may be attachable to an edge surface of one of the panels. The at least one further panel of fire insulating material may be arranged orthogonally to the upper, or lower, surface of the panel to which it is attached.

The at least one further panel of fire insulating material may be attachable to an edge surface of one of the outermost panels of the assembly.

A corner portion of the at least one further panel of fire insulating material may be attachable to the panel.

The at least one further panel of fire insulating material may be attachable to the panel by a screw fastener, such as a fire spring, or the like.

The insulation assembly may further comprise two further panels of insulating material (each further panel being a second further panel). The two further panels of insulating material may be fire insulating material. Each further panel of fire insulating material may have the same features as the at least two panels described above. Each further panel of fire insulating material may be the same as the panels, or slabs, of fire insulating material from which the at least two panels are cut.

Each further panel of fire insulating material may be rectangular.

Each further panel of fire insulating material may be attachable to an edge surface of one of the panels. Each further panel of fire insulating material may be attachable to a different edge surface of one of the panels. Each further panel of fire insulating material may be arranged orthogonally to the upper, or lower, surface of the panel to which it is attached, and each further panel of fire insulating material may be arranged orthogonally to the other. Each further panel of fire insulating material may be attachable to the same panel.

Each further panel of fire insulating material may be attachable to an edge surface of one of the outermost panels of the assembly.

A corner portion of each further panel of fire insulating material may be attachable to the panel.

Each further panel of fire insulating material may be attachable to the panel by a screw fastener, such as a fire spring, or the like.

Each further panel of fire insulating material may be attachable to one another. Each further panel of fire insulating material may be attachable to one another by a screw fastener, such as a fire spring, or the like.

Where the insulation assembly comprises two further panels of fire insulating material, the two panels may be arranged orthogonally to one another. That is, the two panels may be arranged in an L-shape.

The insulation assembly may further comprise three further panels of insulating material (each further panel being a third further panel). The three further panels of insulating material may be fire insulating material. Each further panel of fire insulating material may have the same features as the at least two panels described above. Each further panel of fire insulating material may be the same as the panels, or slabs, of fire insulating material from which the at least two panels are cut.

Each further panel of fire insulating material may be rectangular.

Two of the three further panels of fire insulating material may be attachable to an edge surface of one of the panels. The third further panel of fire insulating material may be attachable to the other two further panels of fire insulating material. Two of the three further panels of fire insulating material may be attachable to a different edge surface of one of the panels. Each of the three further panels of fire insulating material may be arranged orthogonally to the upper, or lower, surface of the panel to which they are attached, and may be arranged orthogonally to each other. Two of the three further panels of fire insulating material may be arranged to be parallel to one another, and the third further panel may be perpendicular thereto. Two of the three further panels of fire insulating material may be attachable to the same panel.

Two of the three further panels of fire insulating material may be attachable to an edge surface of one of the outermost panels of the assembly.

A corner portion of two of the three further panels of fire insulating material may be attachable to the panel.

Two of the three further panels of fire insulating material may be attachable to the panel by a screw fastener, such as a fire spring, or the like. The third further panel of fire insulating material may be attachable to the other two panels. The third further panel of fire insulating material may be attachable to the other two panels by screw fasteners, such as a fire springs, or the like.

Where the insulation assembly comprises three further panels of fire insulating material, the three panels may be arranged orthogonally to one another. That is, the three panels may be arranged in a U-shape.

Each further panel of fire insulating material may be attachable to a different panel of the assembly. Each further panel of fire insulating material may be attachable to a different outermost panel of the assembly. Each further panel of fire insulating material may be attachable to opposing outermost panels of the assembly. That is, a first further panel of fire insulating material may be attachable to an uppermost, or leftmost, panel, and a second further panel of fire insulating material may be attachable to a lowermost, or rightmost, panel (i.e. two first further panels).

Each further panel of fire insulating material may have the same features as the at least two panels described above. Each further panel of fire insulating material may be the same as the panels, or slabs, of fire insulating material from which the at least two panels are cut.

Each further panel of fire insulating material may be rectangular.

Each further panel of fire insulating material may be attachable to an edge surface of the panel. Each further panel of fire insulating material may be attachable to the same edge surface, or corresponding edge surface, of each panel. Each further panel of fire insulating material may be arranged orthogonally to the upper, or lower, surface of the panel to which it is attached, and each further panel of fire insulating material may be parallel with the other.

A corner portion of each further panel of fire insulating material may be attachable to the panel.

Each further panel of fire insulating material may be attachable to the panel by a screw fastener, such as a fire spring, or the like.

The insulation assembly may further comprise four further panels of fire insulating material. Two further panels of fire insulating material may be attachable to one outermost panel of the assembly, and the other two further panels may be attachable to the other outermost panel of the assembly. Each pair of further panels of fire insulating material may be attachable to opposing outermost panels of the assembly. That is, a first pair of further panels of fire insulating material may be attachable to an uppermost, or leftmost, panel, and a second further pair of panels of fire insulating material may be attachable to a lowermost, or rightmost, panel (i.e. two second further panels).

Each further panel of fire insulating material may have the same features as the at least two panels described above. Each further panel of fire insulating material may be the same as the panels, or slabs, of fire insulating material from which the at least two panels are cut.

Each further panel of fire insulating material may be rectangular.

Each further panel of fire insulating material may be attachable to an edge surface of the panel. Each further panel of fire insulating material may be attachable to a different edge surface of the panel. Each further panel of fire insulating material may be arranged orthogonally to the upper, or lower, surface of the panel to which it is attached, and each further panel of fire insulating material may be arranged orthogonally to the other.

A corner portion of each further panel of fire insulating material may be attachable to the panel.

Each further panel of fire insulating material may be attachable to the panel by a screw fastener, such as a fire spring, or the like.

Each pair of further panels of fire insulating material may be attachable to one another. Each pair of further panels of fire insulating material may be attachable to one another by a screw fastener, such as a fire spring, or the like.

The two panels in each pair of further panels of fire insulating material may be arranged orthogonally to one another. That is, the two panels may be arranged in an L-shape.

The insulation assembly may further comprise six further panels of fire insulating material. Two further panels of fire insulating material may be attachable to one outermost panel of the assembly, and another two further panels may be attachable to the other outermost panel of the assembly. Each pair of further panels may include a further panel attached thereto. The two further panels of fire insulating material may be attachable to opposing outermost panels of the assembly. That is, a first pair of further panels of fire insulating material may be attachable to an uppermost, or leftmost, panel, and a second further pair of panels of fire insulating material may be attachable to a lowermost, or rightmost, panel, and each pair of further panels includes a further panel attached therebetween (i.e. two third further panels).

Each further panel of fire insulating material may have the same features as the at least two panels described above. Each further panel of fire insulating material may be the same as the panels, or slabs, of fire insulating material from which the at least two panels are cut.

Each further panel of fire insulating material may be rectangular.

Two of the three further panels of fire insulating material on each side of the insulation assembly may be attachable to an edge surface of the panel. The third further panel of fire insulating material may be attachable to the other two further panels of fire insulating material. Two of the three further panels of fire insulating material on each side of the insulation assembly may be attachable to a different edge surface of the panel. Each of the three further panels of fire insulating material on each side of the insulation assembly may be arranged orthogonally to the upper, or lower, surface of the panel to which they are attached, and may be arranged orthogonally to each other. Two of the three further panels of fire insulating material on each side of the insulation assembly may be arranged to be parallel to one another, and the third further panel may be perpendicular thereto. Two of the three further panels of fire insulating material on each side of the insulation assembly may be attachable to the same panel.

A corner portion of two of the three further panels of fire insulating material on each side of the insulation assembly may be attachable to the panel.

Two of the three further panels of fire insulating material on each side of the insulation assembly may be attachable to the panel by a screw fastener, such as a fire spring, or the like. The third further panel of fire insulating material may be attachable to the other two panels. The third further panel of fire insulating material may be attachable to the other two panels by screw fasteners, such as a fire springs, or the like.

The three panels of fire insulating material on each side of the insulation assembly may be arranged orthogonally to one another. That is, the three panels may be arranged in a U-shape.

The insulation assembly and the further panels of fire insulation material may be arranged to receive at least a portion of a conduit therethrough. The insulation assembly and the further panels of fire insulation material may be arranged to define an aperture through which a conduit may pass. The insulation assembly and the further panels of fire insulation material may be arranged to engage with at least a portion of a conduit. The further panels of fire insulation material may be attachable to the conduit. The insulation assembly may be arranged to be in an interference fit with the conduit.

The insulation system may further comprise one or more further panels of fire insulating material. The one or more further panels of fire insulating material may be configured to be located between a ceiling, deck, roof, or wall, or the like, and a HVAC conduit when the insulation system is in use. The one or more further panels of fire insulating material may or may not be attachable to the HVAC conduit. The one or more further panels of fire insulating material may be the same as the panels, or slabs, of fire insulating material from which the at least two panels are cut.

One or more further panels of fire insulating material may be located on both sides of the insulation assembly.

The insulation system may further comprise one or more structural component attachment members. The structural component attachment members may be elongate members that are configured to be attachable to a ceiling, deck, roof, or wall, or the like. The structural component attachment members may be configured to be located between the ceiling, deck, roof, or wall, or the like, and an upper, or side, corner portion of an HVAC conduit. The one or more structural component attachment members may be configured such that, in use, they retain and/or support the one or more further panels of fire insulating material that are located between the ceiling, deck, roof, or wall, or the like, and the HVAC conduit in place.

The one or more structural component attachment members may or may not be attachable to the one or more further panels of fire insulating material that are located between the ceiling, deck, roof, or wall, or the like, and the HVAC conduit.

The one or more structural component attachment members may be substantially L-shaped members. The one or more structural component attachment members may be made from metal. The one or more structural component attachment members may be mounted such that they follow the direction of the HVAC conduit.

The one or more structural component attachment members may be attachable to the ceiling, deck, roof, or wall, or the like, by screw fasteners.

The one or more structural component attachment members may be arranged to be spaced from the insulation assembly. That is, the one or more structural component attachment members may not contact the insulation assembly.

One or more structural component attachment members may be located on both sides of the insulation assembly.

The insulation system may comprise four structural component attachment members. Two structural component attachment members may be located on one side of the assembly, and the other two structural component attachment members may be located on the other side of the assembly.

The insulation system may further comprise one or more portions of loose mineral wool, such as rock/stone/glass wool. The loose mineral wool being for insertion in an aperture between an HVAC duct and a ceiling, deck, roof, or wall, or the like.

The insulation system may further comprise a sealant material, the sealant material for sealing a mineral wool-filed aperture between an HVAC duct and a ceiling, deck, roof, or wall, or the like.

Embodiments of the third aspect of the present invention may include one or more features of the first and/or second aspects of the present invention or their embodiments. Similarly, embodiments of the first and/or second aspects of the present invention may include one or more features of the third aspect of the present invention or its embodiments.

According to a fourth aspect of the present invention there is provided a method of insulating an aperture, the method comprising the steps of:
providing at least two panels of insulating material; and
inserting each panel into the aperture in layers.

The method may comprise the step of securing the at least two panels together.

The method may be for insulating an aperture in a structural component, or support member, such as an aperture in a ceiling, deck, roof, or wall, or the like. The method may be for insulating an aperture in a structural component, or support member, such as an aperture in a ceiling, deck, roof, or wall, or the like, between the structural component and at least a portion of a heating, ventilation and air conditioning (HVAC) conduit. In this arrangement, the HVAC conduit is penetrating the structural component.

The aperture may surround, or circumscribe, the HVAC conduit.

The HVAC conduit may be substantially rectangular in its lateral cross section.

The method may be for insulating against one or more of the following: fire, smoke, sound, and dampness.

The at least two panels may be, or be made from, fire insulating material. The at least two panels may be, or be made from, smoke insulating material. The at least two panels may be, or be made from, acoustic insulating material. The at least two panels may be, or be made from, condensation insulating material. The at least two panels may be, or be made from, insulating material.

The at least two panels may be substantially planar. The panels may be cut from larger panels, or slabs, of fire insulating material. The panels may be cut from larger planar panels, or slabs, of fire insulating material. The panels may be strip portions, or members. The panels may be portions of fire insulating panels, or slabs. The panels may be panel sections.

The step of providing at least two panels of insulating material may include forming the panels from one or more larger panels, or slabs, of fire insulating material. The panels may be formed by cutting the larger panel.

The at least two panels may be formed to substantially match the shape of the aperture.

The at least two panels may be formed to fill the gap between the HVAC conduit and the aperture.

The panels may be substantially rigid. The panels may be formed from compressed fire insulating material.

The panels may have a density of between 40 kg/m³ and 220 kg/m³. Preferably, the panels have a density of between 60 kg/m³ and 200 kg/m³. More preferably, the panels have a density of between 80 kg/m³ and 180 kg/m³.

The panels may have a thickness of between 20 mm and 200 mm. Preferably, the panels have a thickness of between 30 mm and 150 mm.

More preferably, the panels have a thickness of between 30 mm and 100 mm.

The panels, or slabs, of fire insulating material from which the panels are cut may have a length of between 1,200 mm and 2,400 mm, a width of between 600 mm and 1,800 mm, and a thickness of between 30 mm and 100 mm.

The panels may be formed from mineral wool. The panels may be formed from rock/stone/glass wool. The panels may be formed from compressed mineral wool. The panels may be formed from compressed rock/stone/glass wool.

Each panel section may include an upper surface, a lower surface and an edge surface. The edge surface may be an outer perimeter edge portion. The upper surface and the lower surface may be planar surfaces. At least a portion of the edge surface may be planar. The edge surface may include at least two planar surfaces. The at least two planar surfaces may be parallel to one another. Alternatively, the at least two planar surfaces may be perpendicular to one another. The edge surface may include four planar surfaces. The four planar surfaces may be orthogonally arranged.

The upper surface of the panel section may be coated with a layer of fire insulating material. The upper surface of the panel section may include a coating of fire insulating material. The coating, or coated layer, may be a laminate, or laminated, layer.

The coating, or coated layer, may be a metal. The coating, or coated layer, may be anodised. The outer surface of the coating, or coated layer, may be anodised. The coating, or coated layer, may be an anodised metal.

The coating, or coated layer, may have a thickness of between 0.001 mm and 0.5 mm.

The coating, or coated layer, may be aluminium. The coating, or coated layer, may be black aluminium. The coating, or coated layer, may be anodised aluminium.

The lower surface and edge surface(s) may or may not include a coated layer.

The insulation assembly may include a plurality of panels. The insulation assembly may include three panels. The insulation assembly may include four panels. The insulation assembly may include five panels.

The panels may be arranged such that the upper surface of one panel section faces the lower surface of another panel section.

The panels may be arranged such that the panels abut each other. The panels may be arranged such that there are no gaps between the adjacent upper and lower surfaces.

The panels may be configured to be screwed. That is, the panels may be configured to receive and secure a screw fastener therein.

The panels may be secured together by one or more fastening devices. The fastening devices may be screw members, or the like. The fastening devices may be fire springs, or the like.

The one or more fastening devices may penetrate the upper and/or lower surfaces of the panels. The one or more fastening devices may penetrate the outermost panel section, or panels.

The step of securing the panels together may include screwing the panels with one or more fastening devices.

The panels may be secured together by an adhesive. The adhesive may be a non-combustible adhesive.

The step of securing the panels together may include applying adhesive to the panels.

Each panel section may be the same shape and size. That is, each panel section may be the same shape and have the same thickness. Each panel section may have the same shape of upper surface and lower surface. The panels may be congruent. The panels may be cut to be the same shape and size. Each panel may be substantially identical in geometry and material properties.

The panels may be strips, or stripes, of the larger panel section. Where the larger panel section is a substantially rectangular member, the panels may be lateral strips, or stripes, thereof. That is, the panels may be formed by making cuts along the lateral axis of the larger panel section. In this arrangement, the panels may be substantially cuboid members.

Each panel section may include a generally rectangular upper surface, rectangular lower surface, and four rectangular edge surfaces. The surfaces of the panels may be planar. The upper surface and lower surface may be parallel. Each edge surface may be orthogonally arranged with respect to the upper surface and lower surface.

The secured panels may be inserted into the aperture such that the planes of the upper and lower surfaces are substantially parallel to the plane of the ceiling, deck, roof, or wall in which the aperture is located.

The panels may be of any suitable shape. The panels may be cut to any required shape.

The at least two panels may be a first set of panels. The insulation may comprise a further set of at least two panels. The further set of at least two panels may have the same features as the first set of two panels described above. The insulation assembly may comprise a first set of panels and a second set of panels. Each set of panels may be for insulating the aperture. The method may include forming two or more sets of panels.

The method may comprise the further step of providing a second set of panels and inserting the second set of panels into the aperture with the first set. The first and second sets of panels may or may not be secured together before insertion into the aperture. The first set of panels and second set of panels may be secured together by one or more fastening devices, such as a screw member, or the like.

The first set of panels and second set of panels may together form an L-shape.

The at least two layered panels may have a combined thickness which is at least equal to the depth of the aperture (i.e. the thickness of the ceiling, deck, roof or wall in which the aperture is located). The at least two layered panels may have a combined thickness which is greater than the depth of the aperture. The at least two layered panels may have a combined thickness which is at least equal to the depth of the aperture plus the thickness of two individual panels. The at least two layered panels may have a combined thickness which is greater than the depth of the aperture plus the thickness of two individual panels.

The at least two layered panels may be secured in the aperture by an interference fit between the panels and the aperture.

The method may comprise the further step of inserting a fire insulating material into the aperture that is not adjacent a ceiling, deck, roof or wall of the structural component, or support member. The method may comprise the further step of applying a sealant material to the aperture to cover the fire insulation material and aperture. The fire insulating material may be loose mineral wool, such as rock/stone/glass wool, and the sealant may be a fire sealant.

The method may comprise the further step of providing at least one further panel of insulating material. The at least one further panel of insulating material may be fire insulating material. The at least one further panel of fire insulating material may have the same features as the at least two panels described above. The at least one further panel of fire insulating material may be the same as the panels, or slabs, of fire insulating material from which the at least two panels are cut.

The at least one further panel of fire insulating material may be rectangular.

The at least one further panel of fire insulating material may be attachable to an edge surface of one of the panels. The at least one further panel of fire insulating material may be arranged orthogonally to the upper, or lower, surface of the panel to which it is attached.

The at least one further panel of fire insulating material may be attachable to an edge surface of one of the outermost panels of the assembly.

A corner portion of the at least one further panel of fire insulating material may be attachable to the panel.

The at least one further panel of fire insulating material may be attachable to the panel by a screw fastener, such as a fire spring, or the like.

The method may comprise the further step of attaching the at least one further panel of fire insulating material to an edge surface of one of the panels. The edge surface may be on an outermost panel of the layered panels.

The method may comprise the further step of attaching the at least one further panel of fire insulating material to an edge surface of one of the panels, such that at least a portion of an HVAC conduit penetrating the aperture is covered. The portion of the HVAC conduit covered may be a side, or lower, portion. The at least one further panel of fire insulating material may be positioned to contact the ceiling/deck/roof, wall and HVAC conduit.

The method may comprise the step of providing a further panel of insulating material. The method includes providing two further panels of fire insulating material. The method may comprise the further step of attaching the further panels of fire insulating material to different edge surfaces of the panels, such that two portions of an HVAC conduit penetrating the aperture are covered. The portions of the HVAC conduit covered may be a lower portion and side portion. The further panels of fire insulating material may be positioned to contact the ceiling/deck/roof, wall and HVAC conduit. The two further panels may be arranged orthogonally to each other. The two further panels may be arranged in an L-shape.

The method may comprise the step of providing a further panel of insulating material. The method may include the step of providing three further panels of fire insulating material. The method may comprise the further step of attaching the further panel of fire insulating material to the two other panels. The further panel may be attached between the two other panels. Two of the three further panels may cover side portions of the HVAC conduit and the third further panel may cover a lower portion of the HVAC conduit. The three further panels may cover side portions of the HVAC conduit. Two of the three further panels may be positioned to contact the ceiling/deck/roof, wall and HVAC conduit, and the third further panel may contact the HVAC conduit. The three further panels may be arranged in a U-shape.

The method may comprise the step of providing a further panel of insulating material. The method includes providing a further panel of fire insulating material on each side of the layered panels of insulating material. Each further panel of fire insulating material may be attachable to a different outermost panel of the layered panels. Each further panel of fire insulating material may be attachable to opposing outermost panels of the layered panels. That is, a first further panel of fire insulating material may be attachable to an uppermost, or leftmost, panel, and a second further panel of fire insulating material may be attachable to a lowermost, or rightmost, panel. The method may comprise the further step of attaching the further panels of fire insulating material to edge surfaces of the panels, such that at least two portions of an HVAC conduit penetrating the aperture are covered. The portions of the HVAC conduit covered may be side portions. The further panels of fire insulating material may be positioned to contact the ceiling/deck/roof, wall and HVAC conduit.

The method may comprise the step of providing a further panel of insulating material. The method includes providing two further panels of fire insulating material on each side of the layered panels of insulating material. The method may comprise the further step of attaching two further panels of fire insulating material to one outermost panel of the layered panels, and the other two further panels to the other outermost panel of the layered panels. Each pair of further panels of fire insulating material may be attachable to opposing outermost panels of the layered panels. That is, a first pair of further panels of fire insulating material may be attachable to an uppermost, or leftmost, panel, and a second further pair of panels of fire insulating material may be attachable to a lowermost, or rightmost, panel. The method may comprise the further step of attaching the further panels of fire insulating material to edge surfaces of the panels, such that at least two portions of an HVAC conduit penetrating the aperture are covered. The portions of the HVAC conduit covered may be side, or lower, portions. The further panels of fire insulating material may be positioned to contact the ceiling/deck/roof, wall and HVAC conduit.

Each further panel of fire insulating material may be attachable to an edge surface of the panel. Each further panel of fire insulating material may be attachable to a different edge surface of the panel. Each further panel of fire insulating material may be arranged orthogonally to the upper, or lower, surface of the panel to which it is attached, and each further panel of fire insulating material may be arranged orthogonally to the other. Each pair of further panels may be arranged in an L-shape.

The method may comprise the step of providing a further panel of insulating material. The method includes providing three further panels of fire insulating material on each side of the layered panels of insulating material. The method may comprise the further step of attaching two further panels of fire insulating material to one outermost panel of the layered panels, and the other two further panels to the other outermost panel of the layered panels. Each pair of further panels may include a further panel attached thereto, or therebetween. Each pair of further panels of fire insulating material may be attachable to opposing outermost panels of the layered panels. That is, a first pair of further panels of fire insulating material may be attachable to an uppermost, or leftmost, panel, and a second further pair of panels of fire insulating material may be attachable to a lowermost, or rightmost, panel. The method may comprise the further step of attaching the further panels of fire insulating material to edge surfaces of the panels, such that at least three portions of an HVAC conduit penetrating the aperture are covered. The portions of the HVAC conduit covered may be side portions. Two of the three further panels of fire insulating material on each side of the layered panels may be positioned to contact the ceiling/deck/roof, wall and HVAC conduit, and the third further panel on each side of the layered panels may contact the HVAC conduit.

Two of the three further panels of fire insulating material on each side of the layered panels may be attachable to an edge surface of the panel. The third further panel of fire insulating material may be attachable to the other two further panels of fire insulating material. Two of the three further panels of fire insulating material on each side of the layered panels may be attachable to a different edge surface of the panel. Each of the three further panels of fire insulating material on each side of the layered panels may be arranged orthogonally to the upper, or lower, surface of the panel to which they are attached, and may be arranged orthogonally to each other. Two of the three further panels of fire insulating material on each side of the insulation assembly may be arranged to be parallel to one another, and the third further panel may be perpendicular thereto. Two of the three further panels of fire insulating material on each side of the insulation assembly may be attachable to the same panel.

The three panels of fire insulating material on each side of the layered panels may be arranged orthogonally to one another. That is, the three panels may be arranged in a U-shape.

The method may include the further step of attaching the further panels of fire insulating material to the HVAC conduit. The further panels of fire insulating material may be attached by screw members, or the like.

The method may include the further step of locating one or more further panels of fire insulating materials between the ceiling, deck, roof, or wall, or the like, and a HVAC conduit. The one or more further panels of fire insulating material may be the same as the panels, or slabs, of fire insulating material from which the at least two panels are cut. One or more further panels of fire insulating material may be located on both sides of the layered panels.

The method may include the further step of providing one or more structural component attachment members, and attaching the same between the ceiling, deck, roof, or wall, or the like, and the HVAC conduit.

The one or more structural component attachment members may be elongate members. The one or more structural component attachment members may follow the direction of the HVAC conduit.

The one or more structural component attachment members may be configured such that, in use, they retain and/or support the one or more further panels of fire insulating material that are located between the ceiling, deck, roof, or wall, or the like, and the HVAC conduit in place.

The one or more structural component attachment members may be substantially L-shaped members. The one or more structural component attachment members may be made from metal. The one or more structural component attachment members may be mounted such that they follow the direction of the HVAC conduit.

The one or more structural component attachment members may be attachable to the ceiling, deck, roof, or wall, or the like, by screw fasteners.

The one or more structural component attachment members may be arranged to be spaced from the layered panels. That is, the one or more structural component attachment members may not contact the layered panels.

One or more structural component attachment members may be located on both sides of the layered panels.

Embodiments of the fourth aspect of the present invention may include one or more features of the first, second, and/or third aspects of the present invention or their embodiments. Similarly, embodiments of the first, second, and/or third aspects of the present invention may include one or more features of the fourth aspect of the present invention or its embodiments.

According to a fifth aspect of the present invention, there is provided an insulation system comprising:
an insulation assembly comprising:
   at least two mineral wool insulation panels,
wherein the at least two panels are arranged in layers; and
at least one first further mineral wool insulation panel, the at least one further panel being attachable to an edge surface of one of the at least two panels of the insulation assembly.

Embodiments of the fifth aspect of the present invention may include one or more features of the first, second, third and/or fourth aspects of the present invention or their embodiments. Similarly, embodiments of the first, second, third and/or fourth aspects of the present invention may include one or more features of the fifth aspect of the present invention or its embodiments.

According to a sixth aspect of the present invention, there is provided a method of insulating an aperture, the method comprising the steps of:
providing at least two mineral wool insulation panels;
inserting each panel into the aperture in layers; and
attaching at least one further mineral wool insulation panel to an edge surface of one of the at least two panels of the insulation assembly.

Embodiments of the sixth aspect of the present invention may include one or more features of the first, second, third, fourth and/or fifth aspects of the present invention or their embodiments. Similarly, embodiments of the first, second, third, fourth and/or fifth aspects of the present invention may include one or more features of the sixth aspect of the present invention or its embodiments.

### Brief description of the drawings

Embodiments of the invention will now be described, by way of example only, with reference to the drawings, in which:
Fig. 1a is a longitudinal cross-sectional view of an insulation assembly of the present invention installed in an aperture of a wall at a penetration point of a conduit adjacent a ceiling, or deck;
Fig. 1b is a magnified view of the insulation assembly of Fig. 1a;
Fig. 1c is a magnified view of an insulation assembly installed in the aperture of a wall at a lower penetration point of the conduit;
Fig. 1d is a perspective view of the insulation assembly of Fig. 1a;
Fig. 2a is a longitudinal cross-sectional view of the insulation assembly of Fig. 1a installed in an aperture of a deck, or ceiling, at a penetration point of a conduit adjacent a wall;
Fig. 2b is a magnified view of the insulation assembly of Fig. 1a;
Fig. 2c is a magnified view of an insulation assembly installed in the aperture of the deck, or ceiling, at an opposite side to the insulation assembly of Fig. 1a;
Fig. 3a is a partial lateral cross-sectional view of the assembly of Fig. 1a at the penetration point;
Fig. 3b is a partial lateral cross-sectional view of the assembly of Fig. 1a at a point which is spaced from the penetration point;
Fig. 4a is a partial lateral cross-sectional view of an alternate assembly of Fig. 1a at the penetration point;
Fig. 4b is a is a partial lateral cross-sectional view of an alternate assembly of Fig. 1a at a point which is spaced from the penetration point;
Fig. 5a is a partial lateral cross-sectional view of an alternate assembly of Fig. 1a at the penetration point;
Fig. 5b is a is a partial lateral cross-sectional view of an alternate assembly of Fig. 1a at a point which is spaced from the penetration point;
Fig. 6a is a magnified view of an alternative embodiment of the insulation assembly of Fig. 1a; and
Fig. 6b is a magnified view of another alternative embodiment of the insulation assembly of Fig. 1a.

### Description of preferred embodiments

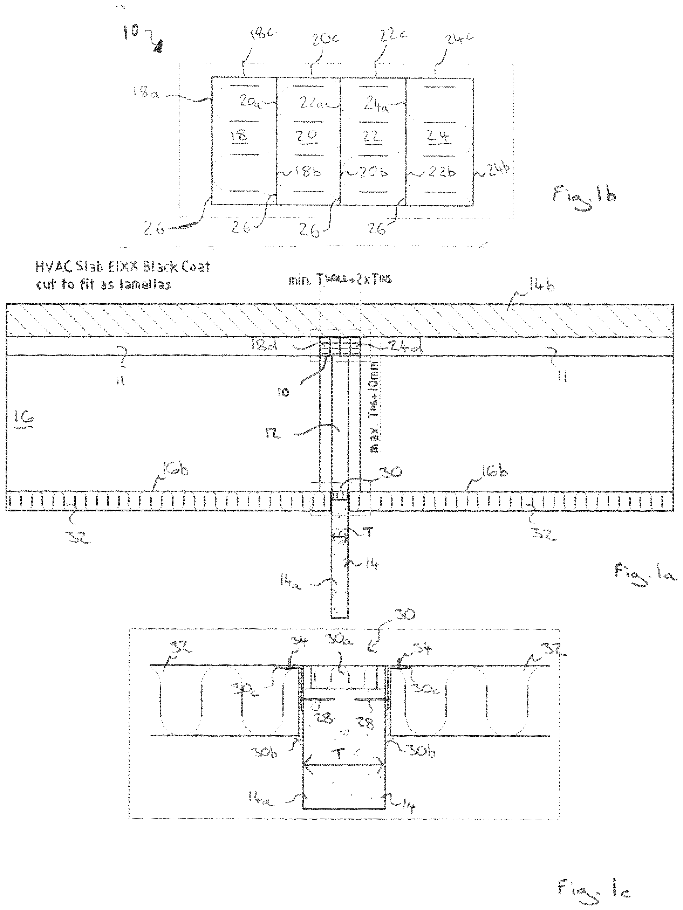

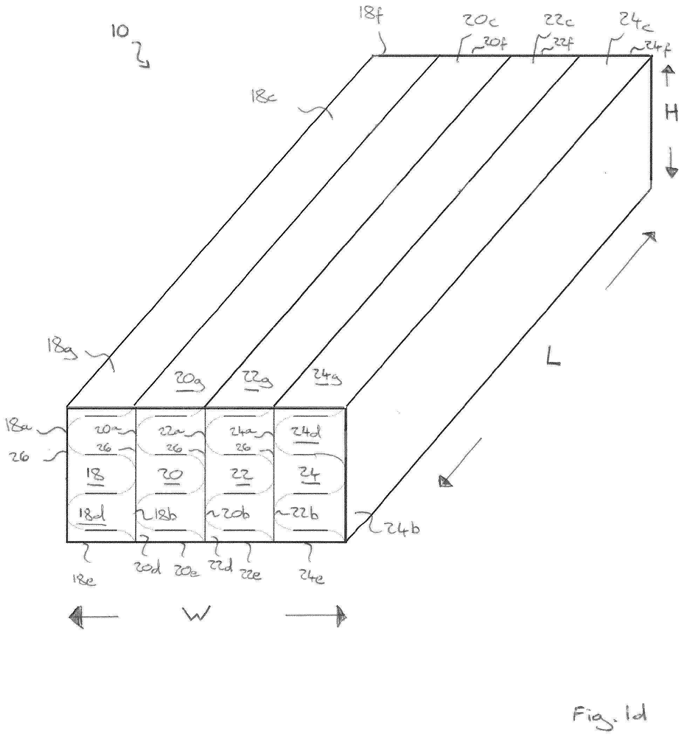

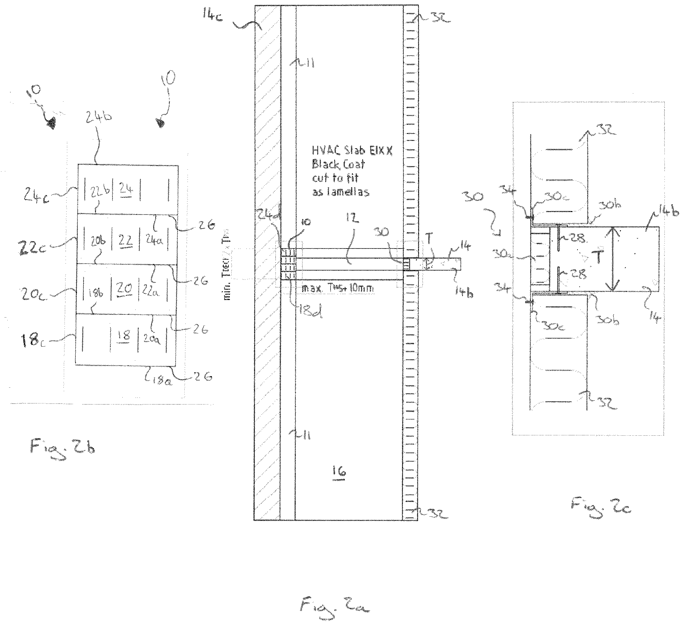

With reference to Figs. 1a, 1b, 1d, 2a and 2b, an insulation assembly 10 for insulating an aperture 12 in a structural component 14 is illustrated. The insulation assembly 10 may provide insulation against fire, smoke, sound and dampness/condensation. In the embodiments illustrated and described here, the insulation assembly 10 is a thermal insulation system. In the illustrated embodiments the assembly 10 is used to insulate an aperture 12 in a wall 14a (Fig. 1a) and a deck 14b (Fig. 2a). The aperture 12 in each embodiment has a heating, ventilation and air conditioning (HVAC) conduit 16 passing therethrough. The insulation assembly 10 is used to insulate the gap 11 between the conduit 16 and the structural component 14. In the embodiment of Fig. 1a, the structural component is a ceiling, or deck 14b, or the like, and in Fig. 2a, the structural component 14 is a wall 14c, or the like.

The insulation assembly 10 comprises of a number of panels of insulating material. In the embodiment illustrated and described here the assembly 10 comprises four panels 18, 20, 22 and 24 of insulating material. However, it should be appreciated that the assembly 10 may comprise at least two panels, or more than four panels.

In the embodiment illustrated and described here, the panels 18, 20, 22, 24 are rectangular cuboids. Each panel 18, 20, 22, 24 includes a rectangular upper surface 18a, 20a, 22a, 24a, a rectangular lower surface 18b, 20b, 22b, 24b, and an edge surface 18c, 20c, 22c, 24c. The upper surfaces 18a, 20a, 22a, 24a and the lower surfaces 18b, 20b, 22b, 24b are planar. The edge surface 18c, 20c, 22c, 24c surrounds the upper surfaces 18a, 20a, 22a, 24a and the lower surfaces 18b, 20b, 22b, 24b. Each edge surface 18c, 20c, 22c, 24c comprises four rectangular planar surfaces 18d - 18g, 20d - 20g, 22d - 22g, 24d - 24g arranged orthogonally with respect to each other and the upper surface 18a, 20a, 22a, 24a, and the lower surface 18b, 20b, 22b, 24b (Fig. 1d).

The panels 18 - 24 may be cut from a larger panel of insulating material (not shown). Typically, the panels 18 - 24 are cut, or formed, from panels of insulating material that have a length of 1,200 mm, a width of 600 mm and a thickness of 60mm (thickness of the insulation T_{INS}). However, it should be appreciated that panels with other dimensions may be used. The panels 18 - 24 may be formed by making cuts along the lateral axis of the larger panel section. However, it should be appreciated that the panels 18 - 24 may be cut to any required shape.

As best illustrated in Fig. 1d, the panels 18 - 24 are formed as strips, or stripes/lamellas. In the embodiment illustrated and described here, each panel 18 - 24 has a thickness of 60 mm. The thickness of each panel 18 - 24 is determined by the thickness of the panel of insulating material used to form the panels 18 - 24. The other dimensions of the panels 18 - 24 are determined by the dimensions of the gap 11 between the conduit 16 and the structural component 14, as described further below.

The panels 18 - 24 may be formed from compressed fire insulating material. The panels 18 - 24 have a density of between 40 kg/m³ and 220 kg/m³. The panels 18 - 24 are therefore substantially rigid. However, it should be appreciated that the panels 18 - 24 may have a density of between 60 kg/m³ and 200 kg/m³, or between 80 kg/m³ and 180 kg/m³.

In the embodiment illustrated and described here, the panels 18 - 24 are formed from mineral wool, such as rock wool, stone wool or glass wool. However, it should be appreciated that other fire insulating materials may be used.

The upper surface 18a, 20a, 22a, 24a of each panel 18 - 24 is coated with a layer of fire insulating material 26. In the embodiment illustrated and described here, the layer of fire insulating material 26 is a coating of anodised aluminium. The thickness of the coating is between 0.001 mm and 0.5 mm. However, it should be appreciated that other coatings and other thicknesses may be used.

As illustrated, the panels 18 - 24 are arranged in layers (lamellas) (an example of layered panels). The panels 18 - 24 are arranged such that the upper surfaces 18a, 20a, 22a, 24a abut the lower surfaces 18b, 20b, 22b, 24b. In this arrangement, the insulation assembly 10 is arranged such that there are no gaps between the upper surfaces 18a, 20a, 22a, 24a the lower surfaces 18b, 20b, 22b, 24b of adjacent panels 18 - 24.

In the embodiment illustrated and described here, each panel section 18 - 24 is the same shape and size. That is, each panel section 18 - 24 is the same shape, has the same thickness, and has the same shape of upper surface 18a, 20a, 22a, 24a and lower surface 18b, 20b, 22b, 24b. The panels 18 - 24 are therefore congruent.

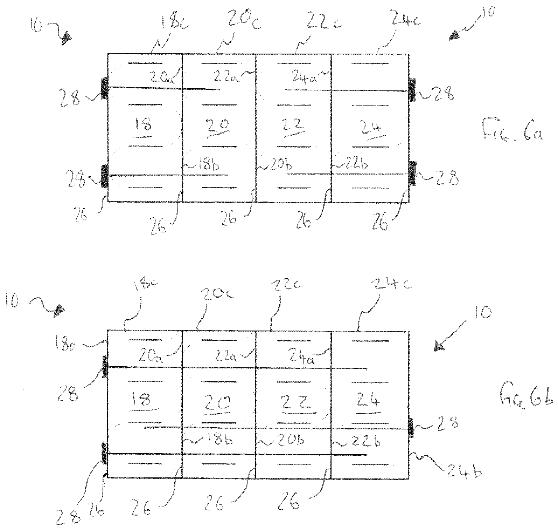

Figs. 6a and 6b show alternative embodiments of the insulation assembly 10, in which the size and density of the panels 18 - 24 is such that they are able to be screwed, i.e. the panels 18 - 24 are able to receive and secure a screw therein. As best illustrated in Figs. 6a and 6b, the panels 18 - 24 are secured together by a plurality of screw members/fire springs 28 (an example of a fastening device). In the embodiment shown in Fig. 6b, the fire springs 28 penetrate the upper surfaces 18a, 20a, 22a, 24a and the lower surfaces 18b, 20b, 22b, 24b of each panel 18 - 24. Whilst, in the embodiment shown in Fig. 6a, the fire springs 28 are used to connect two of the panels 18 - 24 together. It should also be appreciated that the panels 18 - 24 may alternatively be secured together with an adhesive. The adhesive could be a non-combustible adhesive. However, it should be appreciated that other types of adhesive could be used. Furthermore, as shown in Figs. 1a and 1b, the panels 18 - 24 can be unsecured to each other.

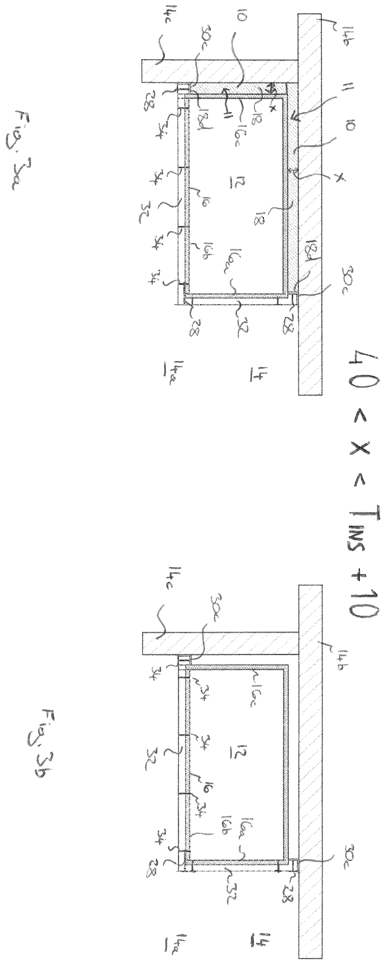

With reference to Figs. 1a, 3a and 3b, a method of installing the insulation assembly 10 (an example of insulating an aperture) will be described.

As described above, the assembly 10 is used to insulate an aperture 12 in a wall 14a through which an HVAC conduit 16 is penetrating. More specifically, the assembly 10 is used to insulate the gaps 11 between the conduit 16, the deck 14b, and an adjacent wall 14c. An additional insulation assembly 30, described further below, is used to insulate the gaps 11 between the conduit 16 and the wall 14a.

As illustrated in Figs. 1a and 3a, the aperture 12 is generally rectangular in shape, when viewed in the longitudinal direction of the conduit 16, and is sized to allow a correspondingly-shaped section of conduit 16 therethrough. That is, the conduit 16 has a generally rectangular lateral cross section. As best illustrated in Fig. 3a, the gaps 11 between the conduit 16 and the wall 14a, wall 14c and deck 14b are also rectangular.

In this embodiment, the distance X between the conduit 16 and the wall 14c and deck 14b is between 40 mm and the thickness of one panel 18 - 24 (T_{INS}) + 10 mm. The insulation assembly 10 of the present invention is used to insulate the gaps 11 between the conduit 16, the deck 14b, and the adjacent wall 14c.

The steps of insulating the aperture 12 are as follows:
The gaps 11 are measured to determine their dimensions. With reference to Fig. 3a, the gaps 11 are rectangular apertures which surround the conduit 16. In this arrangement, where the distance X between the conduit 16 and the wall 14c and deck 14b is between 40 mm and the thickness of one panel 18 - 24 (T_{INS}) + 10 mm, the insulation assembly 10 must be formed to fill this gap. As described further below, the assembly 10 must also be formed to fill the depth T of the aperture 12 (thickness T of the wall 14a).

In the embodiment illustrated and described here, gaps 11 are filled by two assemblies 10 (Fig. 3a). However, it should be appreciated that only one assembly 10 could be used (i.e. an L-shaped assembly).

Once the dimensions of the gaps 11 are known, each panel 18 - 24 is cut from the larger panel and arranged in layers. As illustrated in Fig. 1d, the assembly 10 has a length L, a width W and a height H. Using the upper assembly 10 in Fig. 3a as an example, the length L is determined by the length of the aperture 12. (Note: the length L of the assembly 10 may be equal to the length of the aperture 12, or slightly less, in order to accommodate a further panel of insulating material, as described further below.) The width W of the assembly 10 may be determined by the thickness T (and fire rating) of the wall 14a. The minimum width W of the assembly 10 may be the thickness T of the wall 14a + 2 x the thickness of one panel 18 - 24 (T_{INS}). In this arrangement, when the assembly 10 is installed in the gap 11, the outermost panels 18 and 24 of the assembly protrude from either side of the wall 14a, as illustrated in Fig. 1a. As described further below, this leaves edge surfaces 18d and 24d exposed to facilitate attachment of a further panel of insulating material. The height H of the assembly 10 is determined by the distance (X) between the conduit 16 and the deck 14b/wall 14c. (Note: the height H of the assembly 10 may be such that the assembly 10 may form an interference fit between the conduit 16 and the deck 14b/wall 14c when installed.)

Once the insulation assembly 10 is formed, it is then inserted into the gap 11 between the conduit 16 and the deck 14b/wall 14c.

Either before or after installation of the assembly 10, the gaps 11 between the wall 14a and the conduit 16 are filled using the insulation assembly 30. The insulation assembly 30 includes loose fire insulation material 30a, fire sealant 30b and structural component attachment members 30c. The gaps 11 are filled with the fire insulation material 30a and sealed with fire sealant 30b. The structural component attachment members 30c are mounted to the wall 14a, wall 14c and/or the conduit 16. In the embodiment illustrated here, the position of the conduit 16 relative to the wall 14c and deck 14b means that there is sufficient space below and to the right-hand side 16a of the conduit 16 to allow use of the insulation assembly 30.

Once the insulation assemblies 10 and 30 are installed, the next step is to insulate the conduit 16. This is carried out by providing further panels of fire insulating material 32 (an example of a further panel of insulating material) and attaching them to the assembly 10 and conduit 16, as described further below. It should be appreciated that the insulation assembly 10 and one or more further panels 32 of fire insulating material is an example of an insulation system in accordance with the present invention.

The further panels of fire insulating material 32 are the same as the larger panel from which the panels 18 - 24 are formed. These panels 32 therefore have the same size, shape, properties and characteristics. The panels 32 may be cut to size, if necessary.

Prior to attaching the further panels 32, steel L-profiles 30c (structural component attachment members) are attached to the deck 14b and wall 14c, as illustrated in Figs. 3a and 3b. The L-profiles 30c are arranged to run in the direction of the conduit 16. The L-profiles 30c are attached to the deck 14b and wall 14c by screw members 34, such as steel pins, or the like. The L-profiles 30c are spaced from the wall 14a. That is, the L-profiles 30c do not contact the wall 14a. They are spaced from the wall 14a by an amount that exposes at least the edge surface 18d of the panel 18. This allows the further panel 32 to be attached to the panel 18, as described below. The L-profiles 30c may also be attached to further panels 32 that are attached further down the conduit, via fire springs 28, or screw members 34, as described below.

With reference to Figs. 1a, 1b and 3a, a panel 32 (an example of a first further panel of insulating material) is attached to the right-hand side 16a of conduit 16. The panel 32 is arranged such that it squarely abuts the wall 14a, deck 14b and conduit 16. The panel 32 is attached by firstly aligning a corner portion of the panel 32 with the exposed edge surface 18d of panel 18 and screwing a fire spring 28 therethrough. The panel 32 is then attached to the conduit 16 with further screw members 34, such as steel pins, or the like. The panel 32 may also be attached to the structural component attachment members 30c.

A further panel 32 (an example of a second further panel of insulating material) is then attached to the lower surface 16b of the conduit 16. The panel 32 is again arranged such that it squarely abuts the wall 14a, wall 14c and conduit 16. The panel 32 is attached by firstly aligning a corner portion of the panel 32 with the exposed edge surface 18d of panel 18 and screwing a fire spring 28 therethrough. The panel 32 is again attached to the conduit 16 with further screw members 34, such as steel pins, or the like. The panel 32 may also be attached to the structural component attachment members 30c. (Note: it should be appreciated that the dimensions of the panels 32 may be sized such that they align together in a manner that allows the panels 32 to be flush with the surfaces of the conduit 16).

The panels 32 are then joined together with a fire spring 28, or the like, at the adjoining corner portions.

Further panels 32 are then attached to the conduit 16 in a direction moving away from the wall 14a, as required.

It should be appreciated that the above method of attaching further panels 32 to the assembly 10 and conduit 16 is carried out on both sides of the wall 14a. The further panels 32 are attached to panel 24 in this arrangement.

Fig. 3b is the same partial cross-sectional view as Fig. 3a, except the view is taken at a point that is spaced from the penetration point of the conduit 16. That is, the viewpoint is at a location that is further away from the wall 14a and down the conduit 16 than Fig. 3a. In this arrangement, because the distance X between the conduit 16 and the wall 14c and deck 14b is between 40 mm and the thickness of one panel 18 - 24 (T_{INS}) + 10 mm, no insulation in the gap 11 between the conduit 16 and the wall 14c/deck 14b is required.

The embodiment illustrated in Figs. 2a to 2c is generally identical to the embodiment of Figs. 1a to 1c, except that the assembly 10 is installed in an aperture 12 of a deck 14b (or ceiling). The method of forming and installing the insulation assemblies 10, 30 are substantially identical.

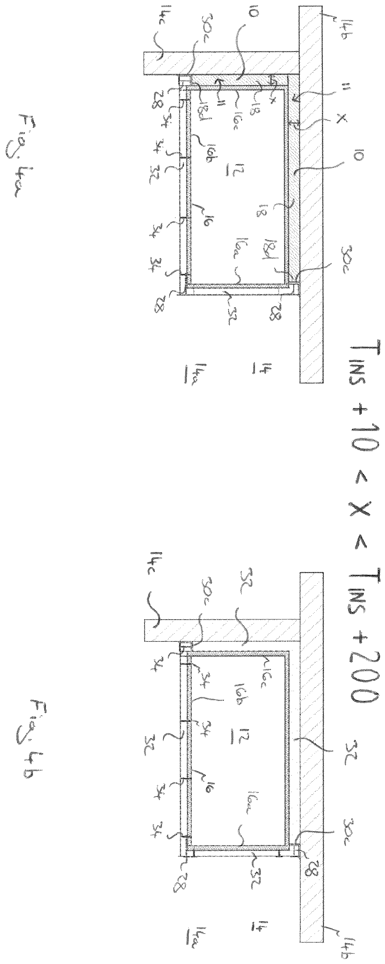

The embodiment illustrated in Figs. 4a and 4b, is generally identical to the embodiment of Figs. 1a to 1d, 3a and 3b, except that the distance X between the conduit 16 and the wall 14c and deck 14b is between the thickness of one panel 18 - 24 (T_{INS}) + 10 mm and the thickness of one panel 18 - 24 (T_{INS}) + 200 mm. The method of forming and installing the insulation assemblies 10, 30 are substantially identical. The only difference between these embodiments is that further panels of fire insulating materials 32 may be inserted into the gaps 11 between the conduit 16 and the deck 14b/wall 14c, as illustrated in Fig. 4b. These panels 32 may not be attached to the conduit 16, or deck 14b/wall 14c. Instead, they may be inserted into the gaps 11 prior to attachment of the L-profiles 30c and panels 32 to the assembly 10 and conduit 16. The L-profiles 30c retain the panels 32 in position. Again, it should be appreciated that the above method of inserting further panels 32 to the gaps 11 is carried out on both sides of the wall 14a.

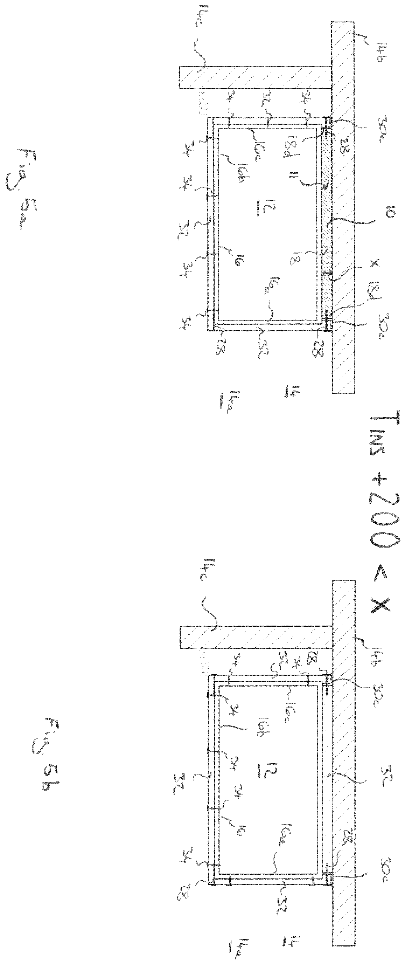

The embodiment illustrated in Figs. 5a and 5b, is similar to the embodiment of Figs. 1a to 1d, 3a and 3b, except that the distance X between the conduit 16 and the wall 14c and deck 14b is greater than thickness of one panel 18 - 24 (T_{INS}) + 200 mm. In this embodiment there is sufficient space between the left-hand side 16c of the conduit 16 and the wall 14c that the insulation assembly 30 may be used to insulate the gap 11. Therefore, only one insulation assembly 10 is provided in the gap 11 between the conduit 16 and the deck 14b. The method of forming and installing the insulation assemblies 10, 30 are substantially identical to the embodiment of Figs. 1a to 1d, 3a and 3b. The only difference is that an additional fire insulating panel 32 (an example of a second further panel of insulating material) is attached to the left-hand side 16c of the conduit 16 and insulation assembly 10. This additional panel 32 is attached in the same manner as described above. The lower panel 32 is an example of a third further panel of insulating material. Again, it should be appreciated that the above method of attaching further panels 32 to the gaps 11 is carried out on both sides of the wall 14a. As illustrated in Fig. 5b, further panels of fire insulating materials 32 may be inserted into the gaps 11 between the conduit 16 and the deck 14b. Again, these panels 32 may not be attached to the conduit 16, or deck 14b, they may be inserted into the gap 11 prior to attachment of the L-profiles 30c and panels 32 to the assembly 10 and conduit 16. Again, it should be appreciated that the above method of inserting further panels 32 to the gaps 11 is carried out on both sides of the wall 14a.

Provision of an insulation assembly 10 that comprises a plurality of panels 18 - 24 of insulating material, as described above, avoids the need to remove the conduit 16 to insulate the aperture 12. Since the insulation assembly 10 is formed to match the gaps 11 between the conduit 16 and the walls 14a, 14b and deck 14c, as well as the thickness T of the wall 14a, the assembly 10 provides the same fire rating as the walls 14a, 14b and deck 14c through which the conduit 16 passes.

The insulation assembly 10, system and method of the present invention provide an efficient and cost-effective solution to installing fire insulation to apertures and conduits that do not have sufficient space for conventional insulation solutions.

Modifications may be made to the foregoing embodiments within the scope of the present invention. For example, although the panels 18 - 24 have been illustrated and described above as being rectangular cuboids, it should be appreciated that the panels 18 - 24 may be other shapes. The shape of the panels 18 - 24 may be determined by the shape of the gap 11 between the conduit 16 and the wall 14a, deck 14b and adjacent wall 14c.

Also, it should be appreciated that the number of panels 18 - 24 in the assembly 10 may be any number required to provide an equal, or greater, fire rating to the wall, deck, etc. through which the conduit 16 is passing. Also, the outermost panels 18 and 24 provide attachment points for the further panels 32 that attach to the conduit 16. However, it should be appreciated that the further panels 32 could attach to other panels 20, 22, should they protrude out from the wall 14a by a sufficient amount.

Furthermore, although the conduit 16 has been illustrated and describe above as a heating, ventilation and air conditioning (HVAC) conduit, it should be appreciated that the assembly 10, system and method of the present invention are applicable to any aperture around a wall/ceiling-penetrating member that is required to be insulated.

Also, although the panels 18 - 24 of the assembly 10 are, in some embodiments, secured together prior to insertion into the gaps 11, it should be appreciated that the panels 18 - 24, in some embodiments, may not be secured together, and may be inserted individually into the gaps 11, and the function and operation of the assembly 10 is substantially the same.

## Claims

1. An insulation system comprising:
an insulation assembly comprising:
at least two mineral wool insulation panels,
wherein the at least two panels are arranged in layers; and
at least one first further mineral wool insulation panel, the at least one further panel being attachable to an edge surface of one of the at least two panels of the insulation assembly.

2. The insulation system of claim 1, wherein the at least two panels of the insulation assembly are secured together.

3. The insulation system of claim 1 or claim 2, wherein the at least one first further panel is arranged orthogonally to the upper, or lower, surface of the panel to which it is attached.

4. The insulation system of any preceding claim, wherein the at least one first further panel is attachable to an edge surface of one of the outermost panels of the assembly.

5. The insulation system of any preceding claim, further comprising a second further mineral wool insulation panel, the second further panel being attachable to a different edge surface of the same panel as the first further panel.

6. The insulation system of claim 5, wherein the second further panel is arranged orthogonally to the upper, or lower, surface of the panel to which it is attached and the first further panel.

7. The insulation system of claim 5 or claim 6, further comprising a third further mineral wool insulation panel, the third further panel being attachable to the first and second further panels.

8. The insulation system of claim 7, wherein the third further panel is arranged orthogonally to the first and second further panels.

9. The insulation system according to any preceding claim, further comprising two first further mineral wool insulation panels, each first further panel being attachable to a different outermost panel of the assembly.

10. The insulation system of claim 9, wherein each first further panel is attachable to the same corresponding edge surface of each panel of the assembly.

11. The insulation system according to any preceding claim, further comprising two second further mineral wool insulation panels, each second further panel being attachable to a different outermost panel of the assembly.

12. The insulation system of claim 11, wherein each second further panel is attachable to the same corresponding edge surface of each panel of the assembly.

13. The insulation system according to any preceding claim, further comprising two third further mineral wool insulation panels, each third further panel being attachable to the first and second further panels.

14. The insulation system of any preceding claim, wherein the at least two panels of the assembly and the further panels are substantially planar and rigid.

15. The insulation system of any preceding claim, wherein the at least two panels and the further panels are rectangular cuboids, with each panel having a planar upper surface, a planar lower surface and four planar edge surfaces.

16. The insulation system of any preceding claim, wherein the upper and/or lower surfaces of the at least two panels of the insulation assembly are coated with a layer of fire insulating material.

17. The insulation system of any preceding claim, wherein at least two panels of the insulation assembly are arranged such that the upper and lower surfaces thereof abut against one another.

18. The insulation system of any preceding claim, wherein the at least two panels of the insulating assembly are substantially identical in geometry and material properties.

19. The insulation system of any preceding claim, wherein each of the at least two panels of the insulation assembly and each further panel have substantially identical material properties.

20. The insulation system of any preceding claim, wherein each of the at least two panels of the insulation assembly and each further panel have substantially identical thicknesses.

21. A method of insulating an aperture, the method comprising the steps of:
providing at least two mineral wool insulation panels;
inserting each panel into the aperture in layers; and
attaching at least one further mineral wool insulation panel to an edge surface of one of the at least two panels of the insulation assembly.
